# EUROPEAN PATENT APPLICATION

(11) **EP 4 804 695 A1**
(43) Date of publication of application: **09.09.2026**
(21) Application number: 23957212.6
(22) Date of filing: 01.11.2023
(51) Int. Cl.: H04W 72/50

(54) **FUNCTIONALITY CONTROL METHOD AND APPARATUS AND COMMUNICATION SYSTEM**

(71) Applicant: 1FINITY INC., Kawasaki-shi, Kanagawa 211-8588 (JP)
(72) Inventor: GENG, Tingting, Beijing 100022 (CN)
(74) Representative: Haseltine Lake Kempner LLP
(86) International application number: PCT/CN2023/129133
(87) International publication number: WO 2025/091339

(57) **Abstract**

Embodiments of the present disclosure provide a functionality control method, a functionality control apparatus, and a communication system. The functionality control apparatus is applied to a terminal equipment, the apparatus comprising a first processor, the first processor controlling the terminal equipment to perform the following operations: transmitting first information to a network device, the first information being used to indicate information on a functionality, wherein the first information comprises resource information required for running of the functionality; and receiving first configuration information transmitted by the network device and determined according to the first information, the first configuration information being used to configure functionality control, the control comprising performing at least one of the following operations on the functionality: activation, deactivation, switch or change, fallback or release.

## Description

### TECHNICAL FIELD

Embodiments of the present disclosure relate to the technical field of communications.

### BACKGROUND

In the technical field of communications, a plurality of scenarios or sub-scenarios, such as channel state information (CSI) enhancement, beam management, positioning or other scenarios, are defined in artificial intelligence/machine learning (AI/ML) topics. Different scenarios or sub-scenarios may correspond to one or more features/feature groups (FGs). AI/ML is applied to the feature(s)/FG(s), called AI/ML-based/enabled feature(s)/FG(s). One AI/ML-based/enabled feature/FG may correspond to one or more AI functionalities, and/or one or more AI models. One AI functionality may correspond to one or more AI models.

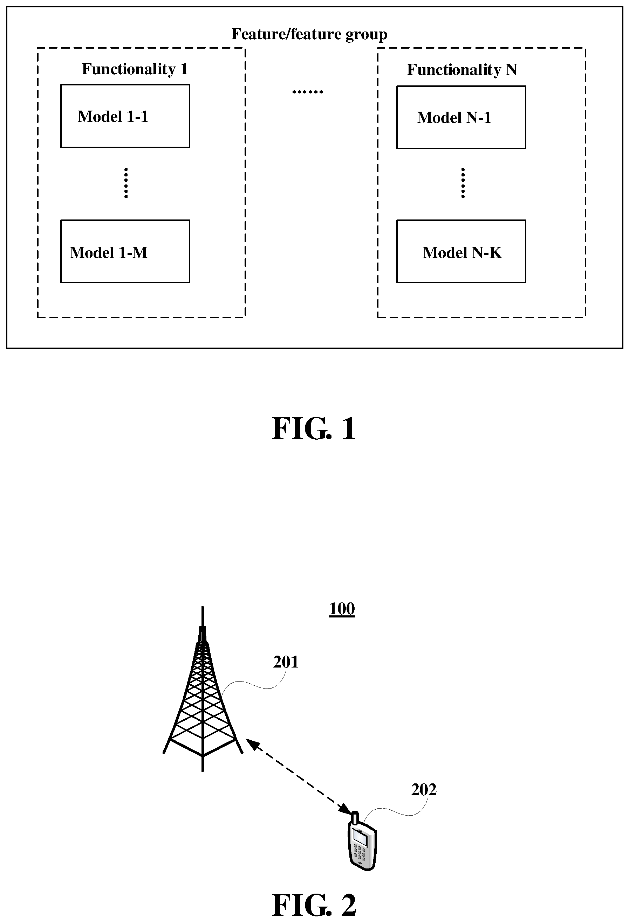

FIG. 1 is a schematic diagram of a logical relationship among a feature/FG, an AI functionality and an AI model.

As shown in FIG.1, in some examples, one feature/FG (e.g., one AI/ML-based/enabled feature/FG) may correspond to one or more AI functionalities, such as functionality 1 to functionality N. Each AI functionality may correspond to one or more AI models. For example, functionality 1 corresponds to model 1-1 to model 1-M, and functionality N corresponds to model N-1 to model N-M.

As shown in FIG.1, functionality 1 to functionality N correspond to dashed boxes. That is, in some other examples, the feature/FG may not correspond to functionalities but directly corresponds to model 1-1 to model 1-M. That is, in these some other examples, FIG. 1 may not have at least one of functionality 1 to functionality N.

Life Cycle Management (LCM) corresponding to AI-based features/FGs may be divided into functionality based LCM and model-ID based LCM according to a granularity of a functionality or model-ID.

LCM may include at least one of the following: data collection, model training, model inference, model monitoring, model/functionality control, model update, model transfer/delivery, model storage, UE capability reporting, or other procedures. Model/functionality control further includes at least one of the following AI operations: selection, activation, deactivation, switch or change, fallback, release, or other operations of a model/functionality. Fallback refers to fallback to a mode in which AI is not applied.

It should be noted that the above introduction to the technical background is just to facilitate a clear and complete description of technical solutions of the present disclosure, and is elaborated to facilitate understanding of persons skilled in the art. It cannot be considered that the technical solutions are known by persons skilled in the art just because these solutions are elaborated in Background of the present disclosure.

### SUMMARY

Inventors of the present disclosure find that in functionality-based LCM, regarding how a network device reasonably selects an AL-based model (an AI/ML-based/enabled functionality), relevant solution mechanisms need to be further taken into account. In addition, regarding how a network device reasonably configures functionality control, relevant solution mechanisms also need to be taken into account.

For at least one of the above problems or other similar problems, embodiments of the present disclosure provide a functionality control method, a functionality control apparatus, and a communication system. In the method, a terminal equipment transmits first information for indicating a functionality to a network device, thereby a network device may reasonably determine a functionality and/or configure functionality control according to the first information.

According to one aspect of embodiments of the present disclosure, a functionality control apparatus is provided and applied to a terminal equipment, the apparatus including a first processor, the first processor controlling the terminal equipment to perform the following operations:
transmitting first information to a network device, the first information being used to indicate information on a functionality, wherein the first information includes resource information required for running of the functionality; and
receiving first configuration information transmitted by the network device and determined according to the first information, the first configuration information being used to configure functionality control,
the control including performing at least one of the following operations on the functionality: activation, deactivation, switch or change, fallback or release.

According to another aspect of embodiments of the present disclosure, a functionality control apparatus is provided and applied to a terminal equipment, the apparatus including a second processor, the second processor controlling the terminal equipment to perform the following operations:
transmitting first information to a network device, the first information being used to indicate current information on one or more activatable functionalities of the terminal equipment;
receiving first configuration information transmitted by the network device and determined according to the first information, the first configuration information being used to configure the terminal equipment to activate at least one of the activatable functionalities; and
activating the at least one of the activatable functionalities according to the first configuration information.

According to another aspect of embodiments of the present disclosure, a functionality control apparatus is provided and applied to a network device, the apparatus including a third processor, the third processor controlling the network device to perform the following operations:
receiving first information transmitted by a terminal equipment, the first information being used to indicate information on a functionality, wherein the first information includes resource information required for running of the functionality; and
transmitting first configuration information determined according to the first information to the terminal equipment, the first configuration information being used to configure functionality control,
the control including performing at least one of the following operations on the functionality: activation, deactivation, switch or change, fallback or release.

According to a further aspect of embodiments of the present disclosure, a functionality control apparatus is provided and applied to a network device, the apparatus including a fourth processor, the fourth processor controlling the network device to perform the following operations:
receiving first information transmitted by a terminal equipment, the first information being used to indicate current information on one or more activatable functionalities of the terminal equipment; and
transmitting first configuration information determined according to the first information to the terminal equipment, the first configuration information being used to configure the terminal equipment to activate at least one of the activatable functionalities.

One of advantageous effects of embodiments of the present disclosure lies in that: a terminal equipment transmits first information for indicating a functionality to a network device, thereby a network device may reasonably determine a functionality and/or configure functionality control according to the first information.

Referring to later descriptions and drawings, specific implementations of the present disclosure are disclosed in detail, indicating modes in which principles of the present disclosure may be adopted. It should be understood that implementations of the present disclosure are not limited in terms of a scope. Within scopes of spirits and terms of attached claims, implementations of the present disclosure include many changes, modifications, and equivalents.

Feature(s) described and/or shown for one implementation may be used in one or more other implementations in the same way or in a similar way, and may be combined with or replace feature(s) in other implementations.

It should be emphasized that term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings and may be used to designate like or similar parts in more than one embodiments.
FIG. 1 is a schematic diagram of a logical relationship among a feature/FG, an AI functionality and an AI model;
FIG. 2 is a schematic diagram of a communication system in the present disclosure;
FIG. 3 is a schematic diagram of a functionality control method in embodiments of a first aspect of the present disclosure;
FIG. 4 is a schematic diagram of a functionality control method in embodiment 1;
FIG. 5 is a schematic diagram of a functionality control method in embodiments of a second aspect of the present disclosure;
FIG. 6 is a schematic diagram of a functionality control method in embodiment 2;
FIG. 7 is a schematic diagram of a functionality control method in embodiments of a third aspect;
FIG. 8 is a schematic diagram of a functionality control method in embodiments of a fourth aspect;
FIG. 9 is a schematic diagram of a functionality control apparatus in embodiments of a fifth aspect;
FIG. 10 is a schematic diagram of a functionality control apparatus in embodiments of a sixth aspect;
FIG. 11 is a schematic diagram of a functionality control apparatus in embodiments of a seventh aspect;
FIG. 12 is a schematic diagram of a functionality control apparatus in embodiments of an eighth aspect;
FIG. 13 is a schematic diagram of a terminal equipment in embodiments of a ninth aspect;
FIG. 14 is a schematic diagram of a network device in embodiments of a ninth aspect.

### DETAILED DESCRIPTION

Referring to the drawings, through the following Specification, aforementioned and other features in the present disclosure will become obvious. Specification and the drawings specifically disclose specific implementations of the present disclosure, indicating partial implementations for which principles of the present disclosure may be adopted. It should be understood that the present disclosure is not limited to described implementations, on the contrary, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more relevantly listed terms. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning of "one", in addition, term "the" should be understood to include both singular forms and plural forms, unless the context clearly indicates otherwise. In addition, term "according to" should be understood as "at least partially according to......", and term "based on" should be understood as "at least partially based on......", unless the context clearly indicates otherwise.

In embodiments of the present disclosure, term "communication network" or " wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system may be performed according to a communication protocol of any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in future.

In embodiments of the present disclosure, term "network device" e.g. refers to a device accessing a terminal equipment to a communication network in a communication system and providing services to the terminal equipment. Network device may include but be not limited to the following devices: an Integrated Access and Backhaul node (IAB-node), a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

Base station may include but be not limited to: node B (NodeB or NB), evolution node B (eNodeB or eNB) and a 5G base station (gNB), etc., and may further include Remote Radio Head (RRH), Remote Radio Unit (RRU), a relay or a low power node (such as femeto, pico, etc.). And term "base station" may include some or all functions thereof, and each base station may provide communication coverage to a specific geographic region. Term "cell" may refer to a base station and/or a coverage area thereof, which depends on a context in which this term is used.

In embodiments of the present disclosure, term "User Equipment (UE)" or "Terminal Equipment (TE) or Terminal Device" refers to e.g. a device accessing a communication network and receiving network services via a network device. Terminal equipment may be fixed or mobile, and may also be called a Mobile Station (MS), a terminal, a Subscriber Station (SS), an Access Terminal (AT), a station and so on.

Terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), a terminal equipment may further be a machine or an apparatus for performing monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, term "network side" or "network device side" refers to a side of a network, may be a certain base station, or may include one or more network devices as mentioned above. Term "user side" or "terminal side" or "terminal equipment side" refers to a side of a user or terminal, may be a certain UE, or may include one or more terminal equipments as mentioned above.

In the following descriptions, without causing confusion, terms "uplink control signal" and "Uplink Control Information (UCI)" or "Physical Uplink Control Channel (PUCCH)" are interchangeable, and terms "uplink data signal" and "uplink data information" or "Physical Uplink Shared Channel (PUSCH)" are interchangeable.

Terms "downlink control signal" and "Downlink Control Information (DCI)" or "Physical Downlink Control Channel (PDCCH)" are interchangeable, and terms "downlink data signal" and "downlink data information" or "Physical Downlink Shared Channel (PDSCH)" are interchangeable.

Moreover, transmitting or receiving a PUSCH may be understood as transmitting or receiving uplink data carried by a PUSCH, transmitting or receiving a PUCCH may be understood as transmitting or receiving uplink information carried by a PUCCH, transmitting or receiving a PRACH may be understood as transmitting or receiving a preamble carried by a PRACH; an uplink signal may include an uplink data signal and/or an uplink control signal, etc., or may also be called UL transmission or uplink information or an uplink channel. Transmitting an uplink transmission on an uplink resource may be understood as transmitting the uplink transmission by using the uplink resource. Similarly, downlink data/signals/channels/information may be understood correspondingly.

In embodiments of the present disclosure, higher layer signaling may be e.g. radio resource control (RRC) signaling; for example, is called an RRC message, for example includes an MIB, system information, and a dedicated RRC message; or is called an RRC information element (RRC IE). Higher layer signaling may further be e.g. Medium Access Control (MAC) signaling; or called a MAC control element (MAC CE). However, the present disclosure is not limited thereto.

Scenarios of embodiments of the present disclosure are described through the following examples, however the present disclosure is not limited thereto.

FIG. 2 is a schematic diagram of a communication system in the present disclosure, schematically describing situations by taking a terminal equipment and a network device as examples, as shown in FIG. 2, a communication system 100 may include a network device 201 and a terminal equipment 202 (for the sake of simplicity, FIG. 2 makes description only by taking one terminal equipment as an example).

In embodiments of the present disclosure, existing services or future implementable services may be carried out between a network device 201 and a terminal equipment 202. For example, these services include but are not limited to: enhanced Mobile Broadband (eMBB), massive Machine Type Communication (mMTC), Ultra-Reliable and Low-Latency Communication (URLLC) and so on.

Terminal equipment 202 may transmit data to a network device 201, for example using a grant-based or grant-free transmission mode. Network device 201 may receive data transmitted by one or more terminal equipments 202, and feed back information to terminal equipment(s)202, such as acknowledgment ACK/ non-acknowledgment ACK information, etc., and terminal equipment(s) 202 may acknowledge end of a transmission process, or may further perform new data transmission, or may perform data retransmission, according to feedback information.

Each embodiment of the present application may apply scenarios containing network device(s) and/or terminal equipment(s), such as a scenario of a communication system shown in FIG. 2.

Network device may include at least one of a core network device, a third-party application device, an operation administration and maintenance (OAM) device, or an access network device. For example, in FIG. 2, that a network device is an access network device is taken as an example.

Core network device may refer to a device in a core network (CN) providing service support for terminal equipments. As some instances, a core network device may be at least one of the following: a mobility and management entity (MME), an access and mobility management function (AMF) entity, a session management function (SMF) entity, a user plane function (UPF) entity, a location management function (LMF) entity, etc., which are not exhaustively listed here. AMF entity may be responsible for terminal access management and mobility management, SMF entity may be responsible for session management, such as user session establishment, and UPF entity may be a functional entity of a user plane and be primarily responsible for connecting to external networks. It should be noted that in the present disclosure, an entity may also be called a network element or a functional entity. For example, an AMF entity may also be called an AMF network element or an AMF functional entity.

Third-party application entity may be an OTT server (over the top server) or other third-party device.

Access network device is an access device through which a terminal wirelessly accesses a communication system. Access network device may be a base station (BS), an evolved NodeB (eNodeB), a transmission reception point (TRP), a base station (next generation NodeB, gNB) in a 5th generation (5G) mobile communication system, a base station in a 6th generation (6G) mobile communication system, a base station in a future mobile communication system or an access node in a WiFi system, etc. Access network device may further be a module or unit that completes part of functions of a base station, for example may be at least one of the following modules or units: a central unit (CU), a distributed unit (DU), a CU control plane (CU-CP), a CU user plane (CU-UP), an Integrated Access Backhaul (IAB) or other module or unit. Embodiments of the present disclosure do not define specific technologies and/or specific device forms adopted for an access network device. Access network device may be deployed on land, including indoors/outdoors, and may be handheld or vehicle-mounted; may further be deployed on water surfaces, on planes, balloons, or satellites. Access network device may be deployed in a fixed location or on a mobile carrier. Embodiments of the present disclosure do not define in this regard.

Terminal equipment (such as terminal equipment 202 in FIG. 2) is a device with a wireless transceiving function, may transmit signals to an access network device and/or receive signals from an access network device. Terminal equipment may also be called a terminal, a mobile station, or a mobile terminal, etc. Terminal equipment may be a mobile phone, a tablet, or other device with a wireless smart transceiving function. Terminal equipment may be widely applied in various scenarios, such as device-to-device (D2D), vehicle-to-everything (V2X) communication, machine-type communication (MTC), Internet of Things (IoT), virtual reality, augmented reality, industrial control, autonomous driving, telemedicine, or various smart scenarios.

Communication between an access network device and a terminal equipment and communication between a terminal equipment and a terminal equipment may be performed via licensed spectrum, or via unlicensed spectrum, or via both licensed spectrum and unlicensed spectrum simultaneously. Embodiments of the present disclosure do not define spectrum resources used for wireless communications.

For ease of description, the following text will take a base station as an example of an access network device for description.

In the following descriptions of the present disclosure, artificial intelligence (AI) may also be called artificial intelligence/machine learning (AI/ML), the two nouns are interchangeable. For example, "AI-based feature or feature group" has the same meaning as "AI or ML-based feature or feature group", and their corresponding English may be AI/ML-based feature/FG.

In the following descriptions of the present disclosure, "feature or feature group" may also be drafted as "feature/feature group", the two are interchangeable, and their corresponding English may be e.g. feature/FG.

### Embodiments of a First Aspect

In a functionality-based life cycle management (LCM) mechanism, if an AI model corresponding to a feature/feature group (feature/FG) is deployed in a terminal equipment (a user equipment (UE)), such as a terminal equipment-sided model (a UE-sided model) or a two-side model deployed in a terminal equipment, when a network (NW) device configures an AI operation with functionality control, a network device may perceive an AI operation with a functionality granularity.

As an example, during functionality control, a network device may not perceive an AI operation with a model granularity inside a terminal equipment. That is, a network device perceives whether an AI operation with a functionality granularity is performed for the feature/FG, and/or which AI operation is performed, but does not perceive model information after a terminal equipment applies an AI operation with a functionality granularity to the feature/FG. For example, an AI model under a functionality corresponding to feature/FG 1 includes model 1, model 2, and model 3. When a network device transmits functionality control configuration information corresponding to feature/FG 1 to indicate a terminal equipment to activate functionality 1 (i.e., to indicate a terminal equipment to activate AI based/enabled feature/FG 1), a terminal equipment may: select an activated model 1; or, deactivate model 1 and switch to activate model 2. The AI operation with a model granularity is transparent to a network device.

In a functionality-based life cycle management (LCM) mechanism, regarding how a network device reasonably selects a functionality, relevant solution mechanisms need to be further taken into account. In addition, regarding how a network device reasonably configures functionality control, relevant solution mechanisms also need to be taken into account.

Embodiments of a first aspect provide a functionality control method, the method being applicable to a terminal equipment, such as terminal equipment 202 in FIG. 2.

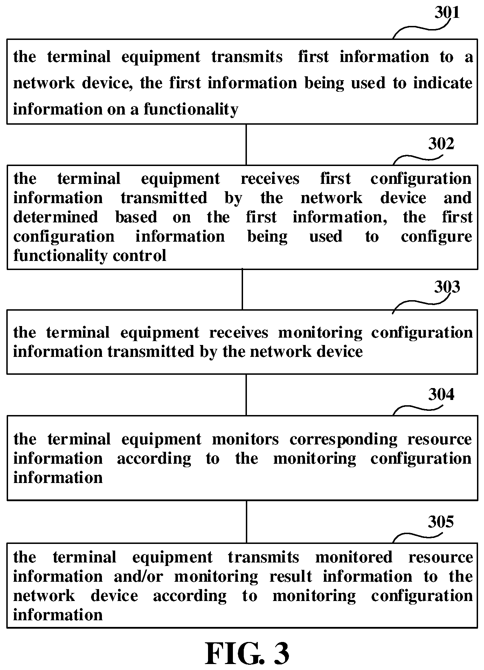

FIG. 3 is a schematic diagram of a functionality control method in embodiments of a first aspect of the present disclosure, and as shown in FIG. 3, the functionality control method includes:
operation 301, the terminal equipment transmits first information to a network device, the first information being used to indicate information on a functionality, the first information includes resource information required for running of the functionality; and
operation 302, the terminal equipment receives first configuration information transmitted by the network device and determined according to the first information, the first configuration information being used to configure functionality control.

In operation 301, resource information includes at least one of memory information, power(battery) information, or computing capability information required to run at least one model under the functionality, or other resource information required for an AI operation.

In at least one embodiment of operation 301, first information further includes at least one of the following pieces of information:
identifier information of a functionality corresponding to an artificial intelligence based feature or feature group supported by the terminal equipment;
first storage information, the first storage information being used to indicate whether the terminal equipment stores a model corresponding to the functionality;
combined information of at least two functionalities corresponding to artificial intelligence based features or feature groups supported by the terminal equipment; for example, the combined information is used to indicate information of at least two functionalities that the terminal equipment is capable of running simultaneously. Optionally, the first information further includes resource information required for running of the at least two functionalities; or
current resource information of the terminal equipment.

In functionality control of operation 302 of the present disclosure, functionality control includes at least one of the following operations (i.e., AI operations) on the functionality: activation, deactivation, switch or change, fallback or release, etc.

As shown in FIG. 3, the functionality control method further includes:
operation 303, the terminal equipment receives monitoring configuration information transmitted by the network device; and
operation 304, the terminal equipment monitors corresponding resource information according to the monitoring configuration information.

Monitoring configuration information received in operation 303 includes at least one of the following pieces of information: to-be-monitored resource information, reporting configuration information, reporting content information, or reporting indication information.

In operation 303:
the reporting configuration information includes monitoring threshold information and/or monitoring period information,
the reporting content information is used to indicate monitored resource information and/or monitoring result information reported by the terminal equipment, and
the reporting indication information is used to indicate occasion for the terminal equipment to report the monitored resource information and/or the monitoring result information.

As shown in FIG. 3, the functionality control method further includes:
operation 305, the terminal equipment transmits monitored resource information and/or monitoring result information to the network device according to monitoring configuration information.

According to the above embodiments, a terminal equipment transmits first information for indicating a functionality to a network device, thereby a network device may reasonably determine a functionality and/or configure functionality control according to the first information.

Functionality control method shown in FIG. 3 is further described below with reference to specific embodiments.

### Embodiment 1

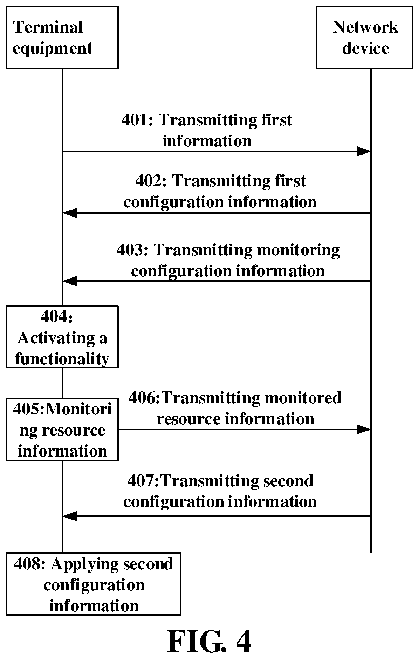

FIG. 4 is a schematic diagram of a functionality control method in embodiment 1, corresponding to a functionality control method shown in FIG. 3.

As shown in FIG. 4, the functionality control method includes the following operations:
Operation 401: a terminal equipment (such as a UE) transmits first information to a network device (NW), the first information being used to indicate information on a functionality.

First information may include at least one of the following information:
1. Identifier information of a functionality corresponding to an artificial intelligence based feature or feature group supported by a terminal equipment: the identifier information may be identity information, an index, or other information for identifying a functionality. For example, when a bitstring corresponds to the number of functionalities, at least one bit in a bitstring may indicate a corresponding functionality. For example, a maximum number of functionalities of an AI/ML-based feature/feature group (AI/ML-based/enabled feature/FG) supported by a terminal equipment or a standard is 8, and a bitstring includes 8 bits. As an example, a first bit of a bitstring corresponds to a functionality with the smallest or largest identifier information, a second bit of the bitstring corresponds to a functionality with the second smallest or second largest identifier information, description for the remaining bits follows similarly and is omitted here.
2. First storage information: first storage information is used to indicate storage information of a model corresponding to a functionality. The storage information is used to indicate whether the terminal equipment has stored a model under the functionality, or the storage information is used to indicate whether a network device needs to transmit a model under this functionality; wherein if the storage information is used to indicate whether the terminal equipment has stored a model under the functionality, the storage information may be of functionality granularity, that is, a terminal equipment indicates whether a model under the functionality has been stored, and does not need to indicate storage information of a model granularity.
3. Resource information required for running of a functionality: the resource information is e.g. AI resource information, used to indicate resource information required for running of the functionality. "Running" may be understood as "applying an AI operation", for example, applying AI and activating it. The resource information may include at least one of memory information, power(battery) information, computing capability information, or other resource information required to run at least one model under the functionality. As an example, resource information required for running of a functionality may be minimum resource information required for running the functionality. For example, if an AI resource includes multiple types of resources, minimum resource information may be resource information required for running one model. That is, in at least one model under the functionality, at least one piece of resource information required for running the model is minimal. For example, if resource information includes {memory, power (battery)}, resource information required for running model 1-1 under functionality 1 is {15, 20}, resource information required for running model 1-2 is {20, 10}, resource information required for running model 1-3 is {20, 30}, among these, running model 1-1 requires the least memory resources, running model 1-2 requires the least power(battery) , accordingly, the required resource information reported by a terminal equipment for running functionality 1, may be resource information {15, 20} required for running of model 1-1, which requires the least memory resources, or resource information {20, 10} required for running of model 1-2, which requires the least power.
4. Combined information of at least two functionalities corresponding to AI-based features or feature groups supported by a terminal equipment: the at least two functionalities may correspond to the same AI-based feature/feature group (FG), or the at least two functionalities may correspond to at least two AI-based features/feature groups (FGs). The combined information is used to indicate information of at least two functionalities that a terminal equipment side may run simultaneously, wherein the at least two functionalities that run simultaneously may correspond to the same feature/FG, or may correspond to different features/FGs. Optionally, the first information may further indicate resource information required for running of at least two combined functionalities. For example, resource information required for running of functionalities under the combination may be a sum of resource information required for running at least one model under each of the functionalities of the combination. The at least two models may be models that require that at least one piece of resource information is the least for running. For a mechanism for determining resource information required for running of at least two combined functionalities, a mechanism for determining resource information required for running of one functionality may be referred to.
5. Current resource information of the terminal equipment: for example, when the terminal equipment receives indication information transmitted by a network device to indicate a terminal equipment to report current resource information, a terminal equipment transmits current resource information to a network device; or, a terminal equipment may transmit current resource information to a network device at an agreed time (for example, periodically).

In operation 401, the above information included in first information may be transmitted to a network device via the same message, or may be transmitted to a network device via at least two messages.

Operation 402: a terminal equipment receives first configuration information transmitted by a network device, the first configuration information being used to configure functionality control.

In operation 402, the functionality control includes performing at least one of the following operations (i.e., AI operations) on a functionality: activation, deactivation, switch or change, fallback or release, etc. For example, first configuration information may include identifier information of an activated functionality, thereby a terminal equipment is able to perform functionality control for the activated functionality.

In the present disclosure, the first configuration information may be determined by a network device according to first information transmitted by a terminal equipment in operation 401. For example, a network device determines control such as change or fallback over an activated functionality according to resource information required for running of functionalities in first information, and generates corresponding first configuration information. The manner in which first configuration information is determined may depend on implementation of a network device.

Optionally, operation 403: a terminal equipment receives monitoring configuration information of resource information transmitted by a network device.

The monitoring configuration information may include at least one of the following pieces of information: to-be-monitored resource information (such as at least one AI resource information), reporting configuration information, reporting content information, or reporting indication information, etc. Reporting configuration information may include monitoring threshold information and/or monitoring period information. Monitoring period information is used to configure a period for the terminal equipment to periodically report monitored resource information and/or a period for reporting monitoring result information. Reporting content information is used to indicate information reported by a terminal equipment, for example a terminal equipment may report monitored resource information, and/or a terminal equipment may report monitoring result information. Reporting indication information is used to indicate occasion for the terminal equipment to report the monitored resource information and/or occasion for reporting the monitoring result information.

It is understandable that first configuration information in operation 402 and monitoring configuration information in operation 403 may be carried in the same message, or may be carried in different messages.

Operation 404: a terminal equipment configures a corresponding functionality according to first configuration information.

For example, in operation 404, a terminal equipment activates a corresponding functionality according to first configuration information.

Optionally, operation 405: a terminal equipment monitors corresponding resource information (such as AI resource information) according to monitoring configuration information of resource information (such as AI resource information).

As an example, monitoring configuration information includes the following information: to-be-monitored resource information is a UE power, reporting configuration information is monitoring threshold information, a monitoring threshold is 30% of power of a terminal equipment or an absolute value Th_energy of a terminal equipment power , and a reporting content is current power information of a terminal equipment. A terminal equipment monitors power of the terminal equipment according to monitoring configuration information, and when the power of the terminal equipment is less than or equal to a monitoring threshold, the terminal equipment reports current power information of the terminal equipment to a network device.

As another example, monitoring configuration information includes monitoring configuration information of at least two types of resource information. Optionally, monitoring configuration information may further include reporting indication information, the reporting indication information being used to indicate that when at least one piece of to-be-monitored resource information satisfies reporting configuration information, a terminal equipment reports at least one monitored resource information and/or monitoring result information. The reporting indication information is used to indicate a terminal equipment to determine a reporting occasion.

For example, monitoring configuration information includes: {[UE power, Th_energy, current power information]; [memory, Th_storage, current memory information]}; in addition, monitoring configuration information may further include reporting indication information. Reporting indication information is used to indicate that when a terminal equipment satisfies monitoring configuration information, a terminal equipment reports a corresponding monitoring content; and/or, reporting indication information is used to indicate that when power of a terminal equipment satisfies monitoring configuration information, a terminal equipment reports corresponding power monitoring information; and/or, reporting indication information is used to indicate that memory of a terminal equipment satisfies a corresponding monitoring configuration threshold, and when a memory of a terminal equipment satisfies a corresponding monitoring configuration threshold, the terminal equipment reports corresponding power monitoring information.

Optionally, operation 406: a terminal equipment reports monitored resource information and/or monitoring structure information to a network device.

For example, if resource information monitored in operation 405 satisfies reporting configuration information, a terminal equipment executes operation 406.

Operation 407: a network device transmits second configuration information to a terminal equipment, second configuration information being used to configure functionality control.

For example, second configuration information is updated configuration information with respect to first configuration information.

Operation 408: a terminal equipment performs corresponding functionality control according to second configuration information, that is, applies second configuration information.

Operations 407 and 408 are optional steps. For example, in a case where configuration information is not updated, operations 407 and 408 may not be performed.

In the present disclosure, the operations 403, 405, and 406 may be used as a separate embodiment to implement: a terminal equipment side monitors resource information of a terminal equipment side according to monitoring configuration information of a network device, and reports to a network device.

### Embodiments of a Second Aspect

Embodiments of a second aspect provides a functionality control method, which is used to solve the same or similar technical problems as those recorded in embodiments of the first aspect. The method is applicable to a terminal equipment, such as terminal equipment 202 in FIG. 2.

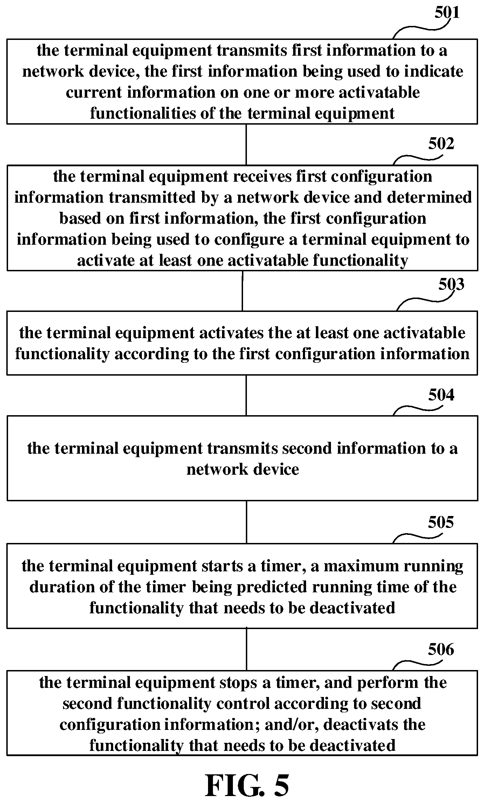

FIG. 5 is a schematic diagram of a functionality control method in embodiments of a second aspect of the present disclosure, and as shown in FIG. 5, the functionality control method includes:
operation 501, the terminal equipment transmits first information to a network device, the first information being used to indicate current information on one or more activatable functionalities of the terminal equipment;
operation 502, the terminal equipment receives first configuration information transmitted by a network device and determined according to first information, the first configuration information being used to configure a terminal equipment to activate at least one activatable functionality; and
operation 503, the terminal equipment activates the at least one activatable functionality according to the first configuration information.

In at least one embodiment, a terminal equipment may determine whether a functionality may be activated according to resource information required for running of a functionality and current resource information of a terminal equipment, thereby determining current information on one or more activatable functionalities of the terminal equipment. Current information on one or more activatable functionalities of the terminal equipment may serve as at least a part of first information, and is transmitted to a network device in operation 501. Thus, a network device is able to generate first configuration information by referring to current information on activatable functionalities of a terminal equipment, thereby reasonably configuring functionality control.

For example, first information in operation 501 indicates that current activatable functionalities of the terminal equipment are a first set {functionality 1, functionality 2, functionality 3, functionality 4}; in operation 502, first configuration information is used to configure functionalities activated by a terminal equipment as a second set, a second set may be a first set or a subset of a first set. For example, a second set is {functionality 1, functionality 3}; and in operation 503, a terminal equipment activates functionalities in a second set according to first configuration information received in operation 502.

In at least one embodiment, the first information further indicates predicted running time information of activatable functionalities, to assist a network device in performing better functionality control.

In at least one embodiment, functionality control includes at least one of the following operations on the functionality: activation, deactivation, switch or change, fallback or release, etc.

As shown in FIG. 5, the method further includes:
operation 504, a terminal equipment transmits second information to a network device.

The second information includes at least one of the following pieces of information:
information on a functionality that needs to be deactivated, the functionality that needs to be deactivated including at least one activated functionality of the terminal equipment;
predicted running time information of the functionality that needs to be deactivated: the predicted running time information is used to indicate predicted remaining running time information of the functionality that needs to be deactivated; or
information on a functionality that is expected to be activated.

As shown in FIG. 5, optionally, the method further includes:
operation 505, the terminal equipment starts a timer, a maximum running duration of the timer being predicted running time of the functionality that needs to be deactivated.

As shown in FIG. 5, optionally, the method further includes:
operation 506, if the timer is running, the terminal equipment receives second configuration information transmitted by the network device, the second configuration information being used to configure second functionality control for the terminal equipment, the terminal equipment stops the timer, and the terminal equipment performs the second functionality control according to the second configuration information; and/or, if the timer expires, the terminal equipment deactivates the functionality that needs to be deactivated. Optionally, if a timer expires, a network device deactivates the functionality that needs to be deactivated.

As another possible implementation, a terminal equipment does not execute operation 506, but executes the following operation 506': when at least one resource information required for running of the functionality satisfies running of the functionality, or within predicted running time of the functionality, if a terminal equipment receives second configuration information transmitted by a network device, the terminal equipment configures second functionality control according to the second configuration information; and/or, when at least one resource information required for running of the functionality does not satisfy running of the functionality, or within predicted running time, if a terminal equipment does not receive second configuration information transmitted by a network device, the terminal equipment deactivates the functionality that needs to be deactivated. Optionally, if predicted running time expires, a network device deactivates the functionality that needs to be deactivated.

According to the above embodiments, a terminal equipment transmits first information for indicating a functionality to a network device, thereby a network device may reasonably determine a functionality and/or configure functionality control according to the first information.

Functionality control method shown in FIG. 5 is further described below with reference to specific embodiments.

### Embodiment 2

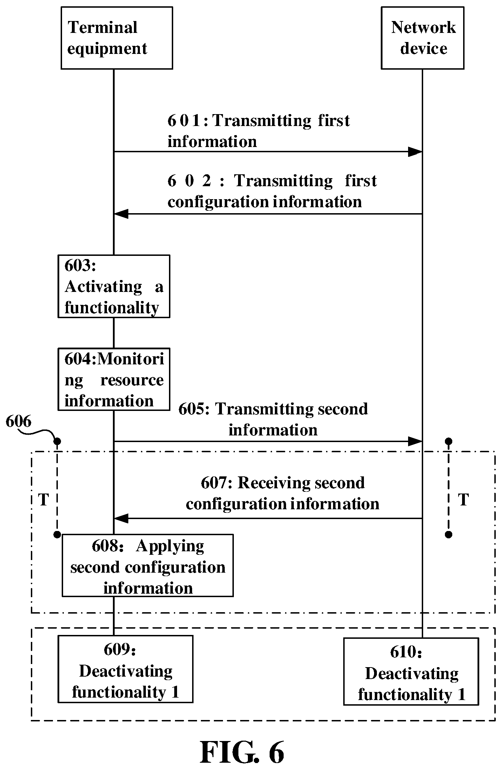

FIG. 6 is a schematic diagram of a functionality control method in embodiment 2, corresponding to a functionality control method shown in FIG. 5.

As shown in FIG. 6, the functionality control method includes the following operations:
operation 601: a terminal equipment (such as a UE) transmits first information to a network device (NW), the first information being used to indicate information on a functionality.

First information may include at least one of the following pieces of information: identifier information of a functionality corresponding to an AI-based feature or feature group supported by a terminal equipment; first storage information; combined information of at least two functionalities corresponding to AI-based features or feature groups supported by a terminal equipment; running information of a functionality; running information of a combination of at least two functionalities; or other information.

Running information of a functionality may be used to indicate whether a terminal equipment may currently run the functionality, and/or the running information may indicate estimated time information for running the functionality. For example, the running information is used to indicate current information on one or more activatable functionalities of the terminal equipment, and/or the running information may indicate predicted running time information of at least one activatable functionality. Running information of a combination of at least two functionalities may be used to indicate whether a terminal equipment may currently run a functionality in the combination, and/or, is used to indicate estimated time information for running a functionality in the combination.

For description of other information included in the first information, description in operation 401 in embodiments of the first aspect may be referred to, elaboration is omitted here.

In operation 601, the above information included in first information may be transmitted to a network device via the same message, or may be transmitted to a network device via at least two messages.

Operation 602: a terminal equipment receives first configuration information transmitted by a network device, the first configuration information being used to configure first functionality control.

In operation 602, the first functionality control includes performing at least one of the following operations (i.e., AI operations) on a functionality: activation, deactivation, switch or change, fallback or release, etc. For example, first configuration information may be used to configure a terminal equipment to activate at least one activatable functionality. Specifically, first configuration information may contain identifier information of an activatable functionality.

In one example, the first configuration information is used to indicate a terminal equipment to activate functionality 1.

Operation 603: a terminal equipment performs corresponding functionality control according to first configuration information. For example, a terminal equipment activates a corresponding functionality.

In one example, a terminal equipment activates functionality 1 according to the first configuration information.

Operation 604: a terminal equipment monitors resource information (such as resource information).

In one example, a terminal equipment may monitor resource information required for running of functionality 1. According to a remaining status of resource information required for running of functionality 1, a terminal equipment may determine: whether running of functionality 1 may continue, and/or, predicted running time for running of functionality 1 may continue. In addition, a terminal equipment is also able to monitor resource information of other functionalities that may be activated.

Optionally, operation 605: a terminal equipment transmits second information to a network device.

For description of second information, description in operation 504 may be referred to.

As one example, second information may include at least one of the following information:
information of a functionality that needs to be deactivated is functionality 1, wherein functionality 1 is an activated functionality;
predicted running time of functionality 1, predicted by a terminal equipment, is T; or
information on a functionality that is expected to be activated, for example, a terminal equipment indicates that functionality 2 may be activated.

Optionally, operation 606: a terminal equipment starts a timer, and a maximum running duration of a timer is predicted running time of a predicted activated functionality (such as functionality 1). For example, a terminal equipment transmits second information to a network device and starts a timer (for example, timer Tfunc1 corresponds to activated functionality i.e., functionality 1), and a maximum running duration of a timer is T (for example, T is predicted running time of a predicted activated functionality i.e., functionality 1).

When a timer (such as timer Tfunc1) corresponding to an activated functionality (such as functionality 1) is running, if a terminal equipment receives second configuration information from a network device, correspondingly, embodiments of the present disclosure perform operation 607.

As a possible implementation, a terminal equipment does not perform operation 606, but performs the following operation 606':
when resource information of a terminal equipment satisfies resource information required for running of the functionality (such as functionality 1), if a terminal equipment receives second configuration information from a network device, correspondingly, embodiments of the present disclosure perform operation 607; or
within remaining running time of a predicted activated functionality (such as functionality 1), if a terminal equipment receives second configuration information from a network device, correspondingly, embodiments of the present disclosure perform operation 607;
in addition, if at least one resource information of a terminal equipment does not satisfy resource information required for running of the functionality (such as functionality 1); or
within predicted running time T of a predicted activated functionality (such as functionality 1), if a terminal equipment does not receive second configuration information from a network device; or
if a timer (such as timer Tfunc1) corresponding to an activated functionality (such as functionality 1) has expired, if a terminal equipment does not receive second configuration information from a network device,
embodiments of the present disclosure perform operation 609.

Operation 607: a terminal equipment receives second configuration information transmitted by a network device.

The second configuration information is used to configure second functionality control for a terminal equipment.

Operation 608: a terminal equipment performs corresponding operations according to second configuration information.

For example, for an activated functionality (such as functionality 1), a terminal equipment performs at least one of operations such as deactivation, change or switch, rollback and release.

Operation 609: a terminal equipment deactivates a corresponding functionality, for example, deactivates functionality 1.

Optionally, operation 610: a network device deactivates functionality 1.

For example, embodiments of the present disclosure do not define time at which a network device deactivates a corresponding functionality. That is, a network device may deactivate a functionality that needs to be deactivated at any time point after receiving second information (operation 605), for example, deactivate functionality 1.

For example, if resource information of a terminal equipment may satisfy resource information required for running of functionality 1, or within time T, or when a timer Tfunc1 is running, if a terminal equipment receives second configuration information transmitted by a network device (operation 607), the terminal equipment performs corresponding operations according to second configuration information. As one example, operation 607 and operation 608 may be referred to.

If at least one resource information of a terminal equipment does not satisfy resource information required for running of functionality 1, or within time T or after timer Tfunc1 expires, if a terminal equipment does not receive second configuration information from a network device, the terminal equipment deactivates functionality 1. A network device may deactivate functionality 1 at any time point after time T or after timer Tfunc1 expires. As one example, operation 609 and operation 610 may be referred to.

In the present disclosure, embodiments of the first aspect and embodiments of the second aspect may be combined. For example, functionality control may be performed on at least part of functionalities according to a method in embodiments of the first aspect, and functionality control may be performed on at least other part of functionalities according to a method in embodiments of the second aspect, thereby achieving more flexible functionality control.

### Embodiments of a Third Aspect

Embodiments of a third aspect provide a functionality control method, applicable to a network device, such as network device 201 in FIG. 2. The method corresponds to embodiments of the first aspect. For parts in the embodiments of the third aspect that are the same as those in embodiments of the first aspect, description in embodiments of the first aspect may be referred to, repeated description is omitted here.

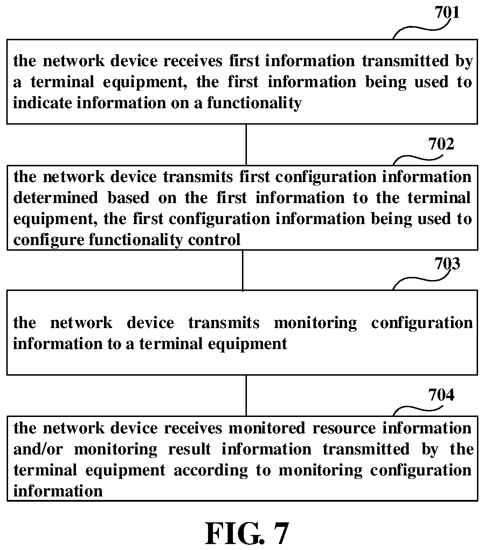

FIG. 7 is a schematic diagram of a functionality control method in embodiments of a third aspect, and as shown in FIG. 7, the method includes:
operation 701, the network device receives first information transmitted by a terminal equipment, the first information being used to indicate information on a functionality, wherein the first information includes resource information required for running of the functionality; and
operation 702, the network device transmits first configuration information determined according to the first information to the terminal equipment, the first configuration information being used to configure functionality control.

Functionality control including performing at least one of the following operations on the functionality: activation, deactivation, switch or change, fallback or release.

In at least one embodiment, resource information includes at least one of memory information, power(battery) information, or computing capability information required to run at least one model under the functionality, or other resource information required for an AI operation.

In at least one embodiment, first information further includes at least one of the following pieces of information:
identifier information of a functionality corresponding to an artificial intelligence based feature or feature group supported by the terminal equipment;
first storage information, the first storage information being used to indicate whether the terminal equipment stores a model corresponding to the functionality;
combined information of at least two functionalities corresponding to artificial intelligence based features or feature groups supported by the terminal equipment; or current resource information of the terminal equipment.

In at least one embodiment, the combined information is used to indicate information of at least two functionalities that the terminal equipment is capable of running simultaneously.

In at least one embodiment, the first information further includes resource information required for running of the at least two functionalities.

In at least one embodiment, as shown in FIG. 7, the method further includes:
operation 703, the network device transmits monitoring configuration information to the terminal equipment; and
operation 704, the network device receives resource information that is monitored according to the monitoring configuration information and/or monitoring result information transmitted by the terminal equipment.

In at least one embodiment, the monitoring configuration information includes at least one of the following pieces of information:
to-be-monitored resource information, reporting configuration information, reporting content information, or reporting indication information.

The reporting configuration information includes monitoring threshold information and/or monitoring period information, the reporting content information is used to indicate monitored resource information and/or monitoring result information reported by the terminal equipment, and the reporting indication information is used to indicate occasion for the terminal equipment to report the monitored resource information and/or the monitoring result information.

According to the above embodiments, a network device receives first information for indicating a functionality from a terminal equipment, thereby a network device may reasonably determine a functionality and/or configure functionality control according to the first information.

### Embodiments of a Fourth Aspect

Embodiments of a fourth aspect provide a functionality control method, applicable to a network device, such as network device 201 in FIG. 2. The method corresponds to embodiments of the second aspect. For parts in embodiments of the fourth aspect that are the same as those in embodiments of the second aspect, description in embodiments of the second aspect may be referred to, repeated description is omitted here.

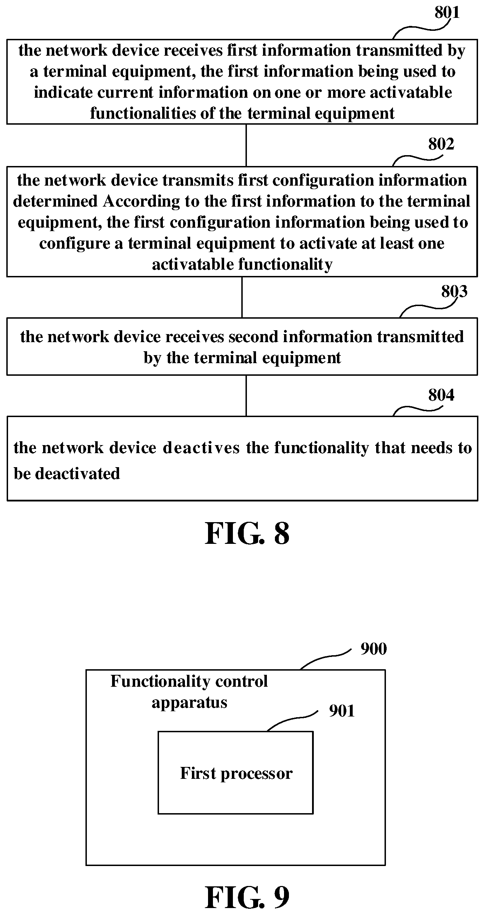

FIG. 8 is a schematic diagram of a functionality control method in embodiments of a fourth aspect, and as shown in FIG. 8, the method includes:
operation 801, the network device receives first information transmitted by a terminal equipment, the first information being used to indicate current information on one or more activatable functionalities of the terminal equipment; and
operation 802, the network device transmits first configuration information determined according to the first information to the terminal equipment, the first configuration information being used to configure the terminal equipment to activate at least one of the activatable functionalities.

In at least one embodiment, first information further indicates predicted running time information of the activatable functionalities.

In at least one embodiment, as shown in FIG. 8, the method further includes:
operation 803, the network device receives second information transmitted by the terminal equipment.

The second information includes at least one of the following pieces of information:
information on a functionality that needs to be deactivated, the functionality that needs to be deactivated including at least one activated functionality of the terminal equipment;
predicted running time information of the functionality that needs to be deactivated; or
information on a functionality that is expected to be activated.

In at least one embodiment, as shown in FIG. 8, the method further includes:
operation 804, the network device deactivates the functionality that needs to be deactivated.

According to the above embodiments, a network device receives first information for indicating a functionality from a terminal equipment, thereby a network device may reasonably determine a functionality and/or configure functionality control according to the first information.

### Embodiments of a Fifth Aspect

Embodiments of a fifth aspect of the present disclosure provide a functionality control apparatus, applicable to a terminal equipment, corresponding to embodiments of the first aspect.

FIG. 9 is a schematic diagram of a functionality control apparatus in embodiments of a fifth aspect. As shown in FIG. 9, the functionality control apparatus 900 includes: a first processor 901.

First processor 901 controls the terminal equipment to perform the following operations:
transmitting first information to a network device, the first information being used to indicate information on a functionality, wherein the first information includes resource information required for running of the functionality; and
receiving first configuration information transmitted by the network device and determined according to the first information, the first configuration information being used to configure functionality control.

The control including performing at least one of the following operations on the functionality: activation, deactivation, switch or change, fallback or release.

In at least one embodiment, resource information includes at least one of memory information, power(battery) information, or computing capability information required to run at least one model under the functionality, or other resource information required for an AI operation.

In at least one embodiment, the first information further includes at least one of the following pieces of information:
identifier information of a functionality corresponding to an artificial intelligence based feature or feature group supported by the terminal equipment;
first storage information, the first storage information being used to indicate whether the terminal equipment stores a model corresponding to the functionality;
combined information of at least two functionalities corresponding to artificial intelligence based features or feature groups supported by the terminal equipment; or current resource information of the terminal equipment.

In at least one embodiment, the combined information is used to indicate information of at least two functionalities that the terminal equipment is capable of running simultaneously.

In at least one embodiment, the first information further includes:
resource information required for running of the at least two functionalities.

In at least one embodiment, the operations further include:
receiving monitoring configuration information transmitted by the network device; and
monitoring corresponding resource information according to the monitoring configuration information.

In at least one embodiment, the monitoring configuration information includes at least one of the following pieces of information:
to-be-monitored resource information, reporting configuration information, reporting content information, or reporting indication information;
wherein,
the reporting configuration information includes monitoring threshold information and/or monitoring period information,
the reporting content information is used to indicate monitored resource information and/or monitoring result information reported by the terminal equipment, and
the reporting indication information is used to indicate occasion for the terminal equipment to report the monitored resource information and/or the monitoring result information.

In at least one embodiment, the operations further include:
transmitting the to-be-monitored resource information and/or the monitoring result information to the network device.

### Embodiments of a Sixth Aspect

Embodiments of a sixth aspect of the present disclosure provide a functionality control apparatus, applicable to a terminal equipment, corresponding to embodiments of the second aspect.

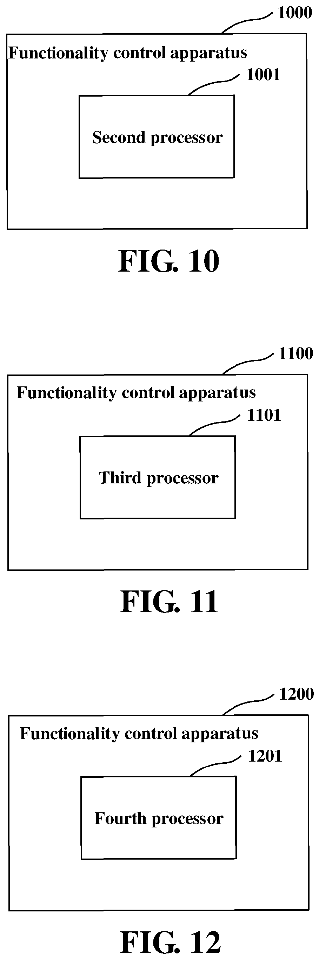

FIG. 10 is a schematic diagram of a functionality control apparatus in embodiments of a sixth aspect. As shown in FIG. 10, the functionality control apparatus 1000 includes: a second processor 1001.

Second processor 1001 controls the terminal equipment to perform the following operations:
transmitting first information to a network device, the first information being used to indicate current information on one or more activatable functionalities of the terminal equipment;
receiving first configuration information transmitted by the network device and determined according to the first information, the first configuration information being used to configure the terminal equipment to activate at least one of the activatable functionalities; and
activating the at least one of the activatable functionalities according to the first configuration information.

In at least one embodiment, the first information further indicates predicted running time information of the activatable functionalities.

In at least one embodiment, the operations further include:
transmitting second information to the network device.

The second information includes at least one of the following pieces of information:
information on a functionality that needs to be deactivated, the functionality that needs to be deactivated including at least one activated functionality of the terminal equipment;
predicted running time information of the functionality that needs to be deactivated; or
information on a functionality that is expected to be activated.

In at least one embodiment, the operations further include:
starting a timer, a maximum running duration of the timer being predicted running time of the functionality that needs to be deactivated.

In at least one embodiment, the operations further include:
if the timer is running, the terminal equipment receives second configuration information transmitted by the network device, the second configuration information being used to configure second functionality control for the terminal equipment, the terminal equipment stops the timer, and the terminal equipment performs the second functionality control according to the second configuration information; and/or
if the timer expires, the terminal equipment deactivates the functionality that needs to be deactivated.

### Embodiments of a Seventh Aspect

Embodiments of a seventh aspect of the present disclosure provide a functionality control apparatus, applicable to a network device, corresponding to embodiments of the third aspect.

FIG. 11 is a schematic diagram of a functionality control apparatus in embodiments of a seventh aspect. As shown in FIG. 11, the functionality control apparatus 1100 includes: a third processor 1101.

Third processor 1101 controls the terminal equipment to perform the following operations:
receiving first information transmitted by a terminal equipment, the first information being used to indicate information on a functionality, the first information includes resource information required for running of the functionality; and
transmitting first configuration information determined according to the first information to the terminal equipment, the first configuration information being used to configure functionality control.

The control including performing at least one of the following operations on the functionality: activation, deactivation, switch or change, fallback or release.

In at least one embodiment, resource information includes at least one of memory information, power information, computing capability information required to run at least one model under the functionality, or other resource information required for an AI operation.

In at least one embodiment, the first information further includes at least one of the following pieces of information:
identifier information of a functionality corresponding to an artificial intelligence based feature or feature group supported by the terminal equipment;
first storage information, the first storage information being used to indicate whether the terminal equipment stores a model corresponding to the functionality;
combined information of at least two functionalities corresponding to artificial intelligence based features or feature groups supported by the terminal equipment; or
current resource information of the terminal equipment.

In at least one embodiment, the combined information is used to indicate information of at least two functionalities that the terminal equipment is capable of running simultaneously.

In at least one embodiment, the first information further includes:
resource information required for running of the at least two functionalities.

In at least one embodiment, the operations further include:
transmitting monitoring configuration information to the terminal equipment; and
receiving resource information that is monitored according to the monitoring configuration information and/or monitoring result information transmitted by the terminal equipment.

In at least one embodiment, the monitoring configuration information includes at least one of the following pieces of information:
to-be-monitored resource information, reporting configuration information, reporting content information, or reporting indication information;
the reporting configuration information includes monitoring threshold information and/or monitoring period information,
the reporting content information is used to indicate monitored resource information and/or monitoring result information reported by the terminal equipment, and
the reporting indication information is used to indicate occasion for the terminal equipment to report the monitored resource information and/or the monitoring result information.

### Embodiments of an Eighth Aspect

Embodiments of an eighth aspect of the present disclosure provide a functionality control apparatus, applicable to a network device, corresponding to embodiments of the fourth aspect.

FIG. 12 is a schematic diagram of a functionality control apparatus in embodiments of an eighth aspect. As shown in FIG. 12, the functionality control apparatus 1200 includes: a fourth processor 1201.

Fourth processor 1201 controls the terminal equipment to perform the following operations:
receiving first information transmitted by a terminal equipment, the first information being used to indicate current information on one or more activatable functionalities of the terminal equipment; and
transmitting first configuration information determined according to the first information to the terminal equipment, the first configuration information being used to configure the terminal equipment to activate at least one of the activatable functionalities.

In at least one embodiment, the first information further indicates predicted running time information of the activatable functionalities.

In at least one embodiment, the operations further include:
receiving second information transmitted by the terminal equipment, wherein the second information includes at least one of the following pieces of information:
information on a functionality that needs to be deactivated, the functionality that needs to be deactivated including at least one activated functionality of the terminal equipment;
predicted running time information of the functionality that needs to be deactivated; or
information on a functionality that is expected to be activated.

In at least one embodiment, the operations further include that:
the network device deactivates the functionality that needs to be deactivated.

### Embodiments of a Ninth Aspect

Embodiments of a ninth aspect of the present disclosure provide a communication system, the communication system may include a network device and a terminal equipment.

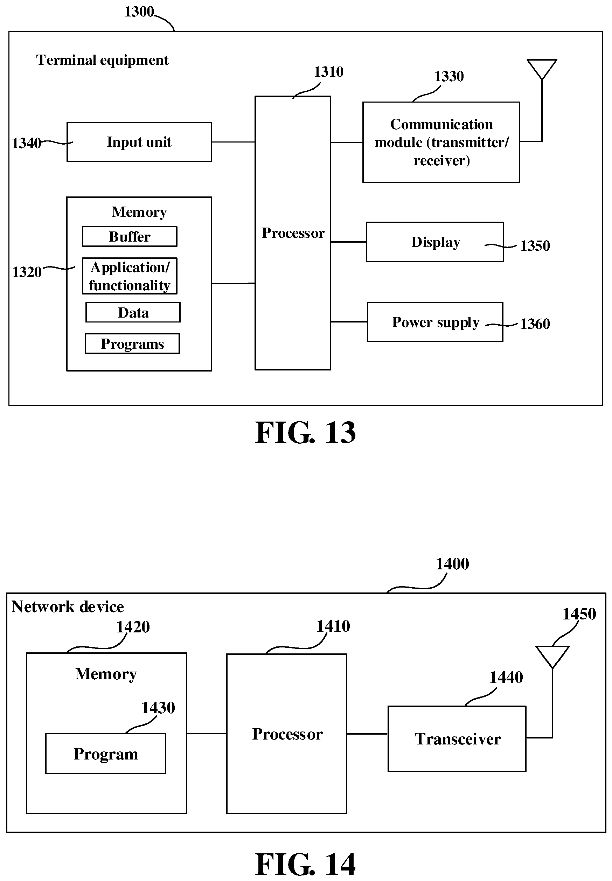

FIG. 13 is a schematic diagram of a terminal equipment in embodiments of a ninth aspect. As shown in FIG. 13, the terminal equipment 1300 (for example, corresponding to terminal equipment 202 in FIG. 2) may include a processor 1310, and a memory 1320 configured to store data and programs and be coupled to processor 1310. It is worth noting that this figure is exemplary, other types of structures may also be used to supplement or replace this structure, to implement a telecommunication function or other functions.

For example, processor 1310 may be configured to execute a program to implement a method in embodiments of the first aspect.

As shown in FIG. 13, the terminal equipment 1300 may further include: a communication module 1330, an input unit 1340, a display 1350, and a power supply 1360. Functions of the above components are similar to related arts, and are not further elaborated here. It is worth noting that terminal equipment 1300 does not have to include all components shown in FIG. 13, said components are not indispensable. Moreover, terminal equipment 1300 may further include components not shown in FIG. 13, related arts may be referred to.

FIG. 14 is a schematic diagram of a network device in embodiments of a ninth aspect. As shown in FIG. 14, network device 1400 (for example, corresponding to network device 201 in FIG. 2) may include: a processor 1410 (such as a central processing unit (CPU)), and a memory 1420 configured to is coupled to processor 1410. The memory 1420 may store various data; moreover, further stores a program 1430 for information processing, and executes the program 1430 under the control of processor 1414.

For example, processor 1414 may be configured to execute a program to implement a method in embodiments of the second aspect.

In addition, as shown in FIG. 14, a network device 1400 may further include a transceiver 1440 and an antenna 1450, etc., wherein functions of said components are similar to related arts and are not further elaborated here. It is worth noting that network device 1400 does not have to include all components shown in FIG. 14. Moreover, network device 1400 may further include components not shown in FIG. 14, related arts may be referred to.

Embodiments of the present disclosure further provide a computer program, wherein when a terminal equipment executes the program, the program enables the terminal equipment to execute a method described in embodiments of the first aspect and/or the second aspect.

Embodiments of the present disclosure further provide a storage medium in which a computer program is stored, wherein the computer program enables a terminal equipment to execute a method in embodiments of the first aspect and/or the second aspect.

Embodiments of the present disclosure further provide a computer program, wherein when a network device executes the program, the program enables the network device to execute a method in embodiments of the third aspect and/or the fourth aspect.

Embodiments of the present disclosure further provide a storage medium in which a computer program is stored, wherein the computer program enables a network device to execute a method in embodiments of the third aspect and/or the fourth aspect.

Apparatuses and methods in the present disclosure may be implemented by hardware, or may be implemented by combining hardware with software. Present disclosure relates to such a computer readable program that when the program is executed by a logic component, the logic component is able to implement the apparatuses described in the above text or a constituent component, or the logic component is able to implement various methods or steps described in the above text. Present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams as shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

Software module may be located in a RAM memory, a flash memory, a ROM memory, an EPROM memory, an EEPROM memory, a register, a hard disk, a mobile magnetic disk, a CD-ROM, or any other form of storage medium as known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

Present disclosure is described above by combining with specific implementations, however persons skilled in the art should clearly know that these descriptions are exemplary and do not limit a protection scope of the present disclosure. Persons skilled in the art may make various variations and amendments to the present disclosure according to spirits and principles of the present disclosure, these variations and amendments are also within a scope of the present disclosure.

As for implementations including the above embodiments, the following supplements are further disclosed:
1. A functionality control method, applicable to a terminal equipment, the method including:
   transmitting first information to a network device, the first information being used to indicate information on a functionality, wherein the first information includes resource information required for running of the functionality; and
   receiving first configuration information transmitted by the network device and determined according to the first information, the first configuration information being used to configure functionality control,
   the control including performing at least one of the following operations on the functionality: activation, deactivation, switch or change, fallback or release.
2. The method according to supplement 1, wherein,
   the resource information includes at least one of memory information, power information, computing capability information required to run at least one model under the functionality, or other resource information required for an AI operation.
3. The method according to supplement 1, wherein the first information further includes at least one of the following pieces of information:
   identifier information of a functionality corresponding to an artificial intelligence based feature or feature group supported by the terminal equipment;
   first storage information, the first storage information being used to indicate whether the terminal equipment stores a model corresponding to the functionality;
   combined information of at least two functionalities corresponding to artificial intelligence based features or feature groups supported by the terminal equipment; or
   current resource information of the terminal equipment.
4. The method according to supplement 3, wherein,
   the combined information is used to indicate information of at least two functionalities that the terminal equipment is capable of running simultaneously.
5. The method according to supplement 4, wherein the first information further includes:
   resource information required for running of the at least two functionalities.
6. The method according to supplement 1, wherein the method further includes:
   receiving monitoring configuration information transmitted by the network device; and
   monitoring corresponding resource information according to the monitoring configuration information.
7. The method according to supplement 6, wherein,
   the monitoring configuration information includes at least one of the following pieces of information:
   to-be-monitored resource information, reporting configuration information, reporting content information, or reporting indication information;
   wherein,
   the reporting configuration information includes monitoring threshold information and/or monitoring period information,
   the reporting content information is used to indicate monitored resource information and/or monitoring result information reported by the terminal equipment, and
   the reporting indication information is used to indicate occasion for the terminal equipment to report the monitored resource information and/or the monitoring result information.
8. The method according to supplement 7, wherein the method further includes:
   transmitting the to-be-monitored resource information and/or the monitoring result information to the network device.
9. A functionality control method, applicable to a terminal equipment, the method including:
   transmitting first information to a network device, the first information being used to indicate current information on one or more activatable functionalities of the terminal equipment;
   receiving first configuration information transmitted by the network device and determined according to the first information, the first configuration information being used to configure the terminal equipment to activate at least one of the activatable functionalities; and
   activating the at least one of the activatable functionalities according to the first configuration information.
10. The method according to supplement 9, wherein the method further includes:
   transmitting second information to the network device,
   wherein the second information includes at least one of the following pieces of information:
      information on a functionality that needs to be deactivated, the functionality that needs to be deactivated including at least one activated functionality of the terminal equipment;
      predicted running time information of the functionality that needs to be deactivated; or
      information on a functionality that is expected to be activated.

## Claims

1. A functionality control apparatus, applied to a terminal equipment, the apparatus comprising a first processor, the first processor controlling the terminal equipment to perform the following operations:
transmitting first information to a network device, the first information being used to indicate information on a functionality, wherein the first information comprises resource information required for running of the functionality; and
receiving first configuration information transmitted by the network device and determined according to the first information, the first configuration information being used to configure functionality control,
the control comprising performing at least one of the following operations on the functionality: activation, deactivation, switch or change, fallback or release.

2. The apparatus according to claim 1, wherein,
the resource information comprises at least one of memory information, power information and computing capability information, required to run at least one model under the functionality.

3. The apparatus according to claim 1, wherein the first information further comprises at least one of the following pieces of information:
identifier information of a functionality corresponding to an artificial intelligence based feature or feature group supported by the terminal equipment;
first storage information, the first storage information being used to indicate whether the terminal equipment stores a model corresponding to the functionality;
combined information of at least two functionalities corresponding to artificial intelligence based features or feature groups supported by the terminal equipment; or
current resource information of the terminal equipment.

4. The apparatus according to claim 3, wherein,
the combined information is used to indicate information of at least two functionalities that the terminal equipment is capable of running simultaneously.

5. The apparatus according to claim 4, wherein the first information further comprises:
resource information required for running of the at least two functionalities.

6. The apparatus according to claim 1, wherein the operations further comprise:
receiving monitoring configuration information transmitted by the network device; and
monitoring corresponding resource information according to the monitoring configuration information.

7. The apparatus according to claim 6, wherein,
the monitoring configuration information comprises at least one of the following pieces of information:
to-be-monitored resource information, reporting configuration information, reporting content information, or reporting indication information;
wherein,
the reporting configuration information comprises monitoring threshold information and/or monitoring period information,
the reporting content information is used to indicate monitored resource information and/or monitoring result information reported by the terminal equipment, and
the reporting indication information is used to indicate occasion for the terminal equipment to report the monitored resource information and/or the monitoring result information.

8. The apparatus according to claim 7, wherein the operations further comprise:
transmitting the to-be-monitored resource information and/or the monitoring result information to the network device.

9. A functionality control apparatus, applied to a terminal equipment, the apparatus comprising a second processor, the second processor controlling the terminal equipment to perform the following operations:
transmitting first information to a network device, the first information being used to indicate current information on one or more activatable functionalities of the terminal equipment;
receiving first configuration information transmitted by the network device and determined according to the first information, the first configuration information being used to configure the terminal equipment to activate at least one of the activatable functionalities; and
activating the at least one of the activatable functionalities according to the first configuration information.

10. The apparatus according to claim 9, wherein,
the first information further indicates predicted running time information of the activatable functionalities.

11. The apparatus according to claim 9, wherein the operations further comprise:
transmitting second information to the network device,
wherein the second information comprises at least one of the following pieces of information:
information on a functionality that needs to be deactivated, the functionality that needs to be deactivated comprising at least one activated functionality of the terminal equipment;
predicted running time information of the functionality that needs to be deactivated; or
information on a functionality that is expected to be activated.

12. The apparatus according to claim 11, wherein the operations further comprise:
starting a timer, a maximum running duration of the timer being predicted running time of the functionality that needs to be deactivated.

13. The apparatus according to claim 12, wherein the operations further comprise:
if the timer is running, the terminal equipment receives second configuration information transmitted by the network device, the second configuration information being used to configure second functionality control for the terminal equipment, the terminal equipment stops the timer, and the terminal equipment performs the second functionality control according to the second configuration information; and/or
if the timer expires, the terminal equipment deactivates the functionality that needs to be deactivated.

14. A functionality control apparatus, applied to a network device, the apparatus comprising a third processor, the third processor controlling the network device to perform the following operations:
receiving first information transmitted by a terminal equipment, the first information being used to indicate information on a functionality, wherein the first information comprises resource information required for running of the functionality; and
transmitting first configuration information determined according to the first information to the terminal equipment, the first configuration information being used to configure functionality control,
the control comprising performing at least one of the following operations on the functionality: activation, deactivation, switch or change, fallback or release.

15. The apparatus according to claim 14, wherein,
the resource information comprises at least one of memory information, power information and computing capability information, required to run at least one model under the functionality.

16. The apparatus according to claim 14, wherein the first information further comprises at least one of the following pieces of information:
identifier information of a functionality corresponding to an artificial intelligence based feature or feature group supported by the terminal equipment;
first storage information, the first storage information being used to indicate whether the terminal equipment stores a model corresponding to the functionality;
combined information of at least two functionalities corresponding to artificial intelligence based features or feature groups supported by the terminal equipment; or
current resource information of the terminal equipment.

17. The apparatus according to claim 16, wherein,
the combined information is used to indicate information of at least two functionalities that the terminal equipment is capable of running simultaneously.

18. The apparatus according to claim 17, wherein the first information further comprises:
resource information required for running of the at least two functionalities.

19. The apparatus according to claim 14, wherein the operations further comprise:
transmitting monitoring configuration information to the terminal equipment; and
receiving resource information that is monitored according to the monitoring configuration information and/or monitoring result information transmitted by the terminal equipment.

20. The apparatus according to claim 19, wherein,
the monitoring configuration information comprises at least one of the following pieces of information:
to-be-monitored resource information, reporting configuration information, reporting content information, or reporting indication information;
wherein,
the reporting configuration information comprises monitoring threshold information and/or monitoring period information,
the reporting content information is used to indicate monitored resource information and/or monitoring result information reported by the terminal equipment, and
the reporting indication information is used to indicate occasion for the terminal equipment to report the monitored resource information and/or the monitoring result information.
